# FASCICULE DE BREVET EUROPEEN

(11) **EP 1 269 604 B1**
(45) Date de publication et mention de la délivrance du brevet: **16.11.2011**
(21) Numéro de dépôt: 02700328.4
(22) Date de dépôt: 16.01.2002
(51) Int. Cl.: H02K 5/22, H01R 13/506, H01R 13/621

(54) **CONNECTEUR ELECTRIQUE A CONTACTS MULTIPLES ET MACHINE ELECTRIQUE TOURNANTE PORTANT UN TEL CONNECTEUR**
ELEKTRISCHER VERBINDER MIT MEHRFACHKONTAKTELEMENTEN UND DREHENDE ELEKTRISCHE MASCHINE MIT EINEM SOLCHEN VERBINDER
MULTICONTACT ELECTRICAL CONNECTOR AND ROTATING ELECTRICAL MACHINE BEARING SAME

(30) Priorité: 24.01.2001 FR 0100931
(43) Date de publication de la demande: 02.01.2003
(73) Titulaire: VALEO EQUIPEMENTS ELECTRIQUES MOTEUR, 94017 Créteil Cedex (FR)
(72) Inventeur: ABADIA, Roger, F-93360 Neuilly-Plaisance (FR); MASRIERA, Serge, F-69006 Lyon (FR)
(74) Mandataire: Gamonal, Didier
(86) Numéro de dépôt international: PCT/FR2002/000158
(87) Numéro de publication internationale: WO 2002/060038

(56) Documents cités:
- FR-A- 2 467 507
- FR-A- 2 754 650

## Description

### Domaine de l'invention

L'invention concerne un connecteur électrique à contacts multiples et une machine électrique tournante portant un tel connecteur.

L'invention concerne plus particulièrement un connecteur pour réaliser un raccordement électrique entre deux sous-ensembles, ledit connecteur appartenant à un dispositif de connexion comportant des câbles électriques reliant entre eux les deux connecteurs associés à chacun des sous-ensembles. Un tel connecteur est décrit dans le document FR-A-2 754 650.

Certains dispositifs tels que des moteurs ou générateurs électriques, par exemple des alternateurs ou des alternateurs-démarreurs, doivent être reliés électriquement à un deuxième dispositif tel qu'un système de commande monté dans un boîtier dit boîtier électronique. Chaque phase de l'un des dispositifs doit être reliée à la phase correspondante de l'autre dispositif. Cette liaison peut-être obtenue par contact direct des phases correspondantes des deux dispositifs mais, de manière générale, elle est réalisée par des câbles comprenant plusieurs fils électriques dont chacun permet de relier une phase.

Il est ainsi nécessaire de réaliser un raccordement électrique entre l'extrémité de chaque fil et la phase correspondante du dispositif.

### Etat de la technique

Une solution consiste à mettre en contact une extrémité d'un fil avec la zone conductrice correspondante du dispositif et de les maintenir en contact par un assemblage vissé. Cette solution présente plusieurs inconvénients.

D'une part, il est nécessaire de réaliser autant d'assemblages qu'il y a de raccordements électriques à réaliser, ce qui entraîne un coût important dans la mesure où le nombre de pièces ainsi que les temps de montage sont multipliés par le nombre de raccordements à réaliser. D'autre part, les contacts sont réalisés par simple pression entre les zones conductrices du dispositif et du câble, et ils sont alors soumis aux vibrations ainsi qu'aux conditions extérieures, ce qui augmente le risque de corrosion et de détérioration du contact électrique.

Le brevet français n° 96.12609, publié sous le numéro FR-A-2 754 650 (US-A-5 924 897) propose une connexion électrique qui permet en un point de fixation unique, d'assurer une pluralité de contacts électriques entre deux dispositifs électriques. La connexion électrique proposée assure aussi une étanchéité suffisante pour protéger les contacts électriques contre la corrosion.

L'élément de connexion électrique se compose de deux parties, mâle et femelle, comportant chacune au moins deux éléments conducteurs correspondants chacun à une phase électrique. Ces deux parties sont mises en contact par un moyen unique, tel qu'un assemblage vis-écrou, qui permet de serrer la partie mâle contre la partie femelle.

On peut songer à prévoir des moyens élastiquement déformables pour assurer un bon contact entre les éléments électriquement conducteurs et une bonne répartition des pressions comme décrit dans le document FR 0010737 publié le 30/03/2001(après la date de priorité de la présente demande) sous le numéro FR-A-2 799 053.

Cette solution donne satisfaction mais conduit à prévoir des moyens élastiquement déformables supplémentaires au niveau du premier sous-ensemble, ainsi que des premiers éléments conducteurs en forme de plots guidés et mobiles à translation.

### Objet de l'invention

La présente invention a pour objet de simplifier le premier sous-ensemble du connecteur tout en ayant un connecteur de grande fiabilité.

Suivant l'invention un connecteur pour réaliser un raccordement électrique entre, d'une part, un premier sous-ensemble comprenant au moins deux premiers éléments électriquement conducteurs comprenant chacun une première portée et, d'autre part, un deuxième sous-ensemble comprenant au moins deux seconds éléments électriquement conducteurs comprenant chacun une deuxième portée, dans lequel les premières portées sont destinées à venir en contact électrique avec les secondes portées par l'une de leur face et en appui avec une zone de pression appartenant au premier sous-ensemble par leur autre face, tandis que l'autre face des secondes portées est destinée à venir en appui avec une zone de réaction appartenant à un support que comporte le deuxième sous-ensemble pour fixation des deuxièmes éléments et dans lequel des moyens d'assemblage interviennent entre la zone de pression et la zone de réaction pour serrer entre celles-ci les premières et les secondes portées et exercer une pression de contact sur lesdites portées, est **caractérisé en ce que** le premier sous-ensemble comporte un carter de positionnement et de montage à flexion des premiers éléments électriquement conducteurs, et en ce que le carter, d'une part, porte la zone de pression et, d'autre part, comporte en regard de la zone de pression un orifice pour autoriser un mouvement des premières portées.

Suivant l'invention une machine électrique tournante comportant un palier arrière est caractérisée en ce que le second sous-ensemble du connecteur est porté par le palier arrière.

Grâce à l'invention, notamment au montage à flexion des premiers éléments électriquement conducteurs, on peut supprimer les moyens élastiquement déformables supplémentaires du premier sous-ensemble tout en ayant des contacts fiables entre les premiers et seconds éléments conducteurs homologues, un nombre réduit de pièces et un carter simple.

Les défauts de planéité peuvent être rattrapés au moins en majeure partie en sorte que l'aire de contact entre les éléments électriquement conducteurs homologues est grande et que les risques de surchauffe du connecteur sont réduits.

La liaison entre les câbles et les premiers éléments conducteurs est simple.

Dans une forme de réalisation le carter est **caractérisé en ce qu'**il est délimité, d'une part, par un boîtier de positionnement des premiers éléments et, d'autre part, par un couvercle presseur comprenant la zone de pression et en ce que le boîtier comporte en regard de la zone de pression un orifice pour autoriser un mouvement des premières portées.

Dans une autre forme de réalisation la zone de pression est rapportée sur le carter doté de l'orifice pour autoriser un mouvement des premières portées.

La zone de pression est par exemple rapportée à étanchéité par clipsage, collage, soudage par ultrasons, soudure miroir, soudure laser... etc sur le carter. Le carter est avantageusement obtenu par la technique du surmoulage sur les premiers éléments électriquement conducteurs, qui sont ainsi positionnés. Bien entendues les premières portées sont apparentes au niveau de l'orifice du carter pour pouvoir fléchir.

Les premiers éléments électriquement conducteurs s'étendent perpendiculairement à l'axe d'assemblage et sont dans une forme de réalisation en forme de bandes métalliques, notamment en forme de languettes, conformées à l'arrière pour former des cosses de raccordement aux câbles électriques en sorte que la solution est simple, économique et fiable.

Dans une forme de réalisation on prévoit trois premiers et seconds éléments électriquement conducteurs.

Cette disposition permet de réaliser des contacts de grande aire permettant le passage de courant de forte intensité tout en ayant une bonne répartition des pressions.

Avantageusement le boîtier et le couvercle presseur sont cloisonnés pour séparation et isolement électrique des premiers éléments conducteurs.

Le boîtier comporte des moyens de positionnement, tels que des saillies, pour les premiers éléments conducteurs.

Ce boîtier sert de réceptacle à ces premiers éléments conducteurs avant sa fermeture par le couvercle presseur en sorte qu'il est avantageusement moins rigide que le couvercle et est en matière plus économique que celui-ci.

Le boîtier est avantageusement nervuré pour augmenter sa résistance et il en est de même du couvercle, qui présente avantageusement des moyens pour éviter un soulèvement des premiers éléments conducteurs. On contrôle ainsi la flexion des premiers éléments électriquement conducteurs.

Avantageusement pour réduction de l'encombrement des moyens de blocage en rotation du premier sous-ensemble sont implantés à la faveur des espaces séparant circonférentiellement les premières et secondes portées de contact. Ces moyens comportent des cloisons de séparation issues de la zone de réaction. Ces cloisons ont ainsi une double fonction de rigidification de la zone de réaction et d'isolement électrique des secondes portées.

### Brève description des dessins

D'autres caractéristiques et avantages apparaîtront à la lecture de la description pour la compréhension de laquelle on se reportera aux dessins annexés parmi lesquels :
- la figure 1 est une vue en perspective du connecteur selon l'invention monté sur le palier arrière d'une machine électrique tournante polyphasée et réversible constituant un alternateur-démarreur ;
- la figure 2 est une vue partielle en coupe axiale, selon la ligne 2-2 de la figure 1, du connecteur montrant les moyens d'assemblage que comporte le connecteur ;

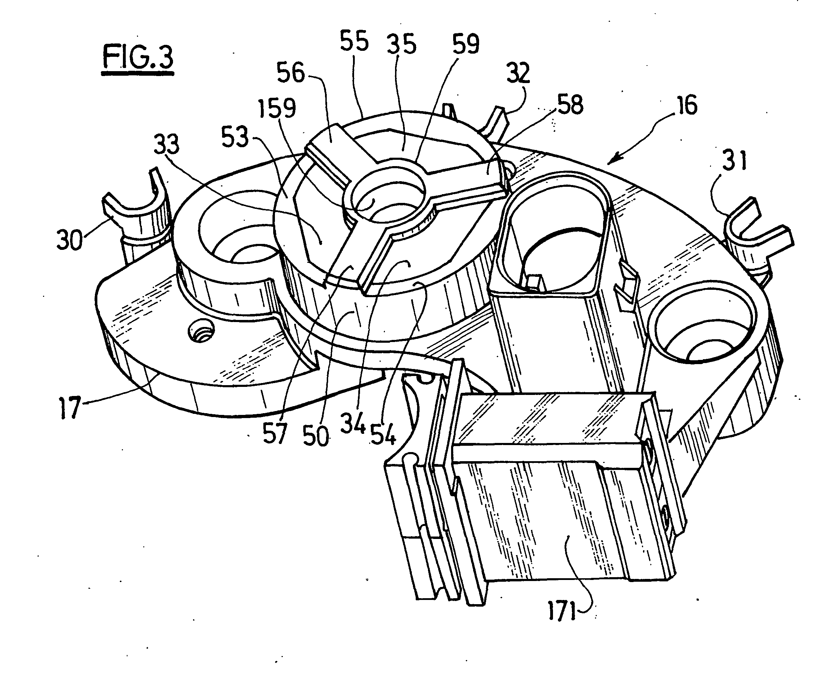

- la figure 3 est une vue en perspective du deuxième sous-ensemble que comporte le connecteur ;
- la figure 4 est une vue en perspective du couvercle presseur appartenant à un premier sous-ensemble que comporte le connecteur ;
- la figure 5 est une vue en perspective du boîtier de positionnement que comporte le premier sous-ensemble du connecteur ;
- la figure 6 est une vue en perspective du connecteur monté sur le palier arrière de la machine électrique tournante sans son couvercle presseur ;

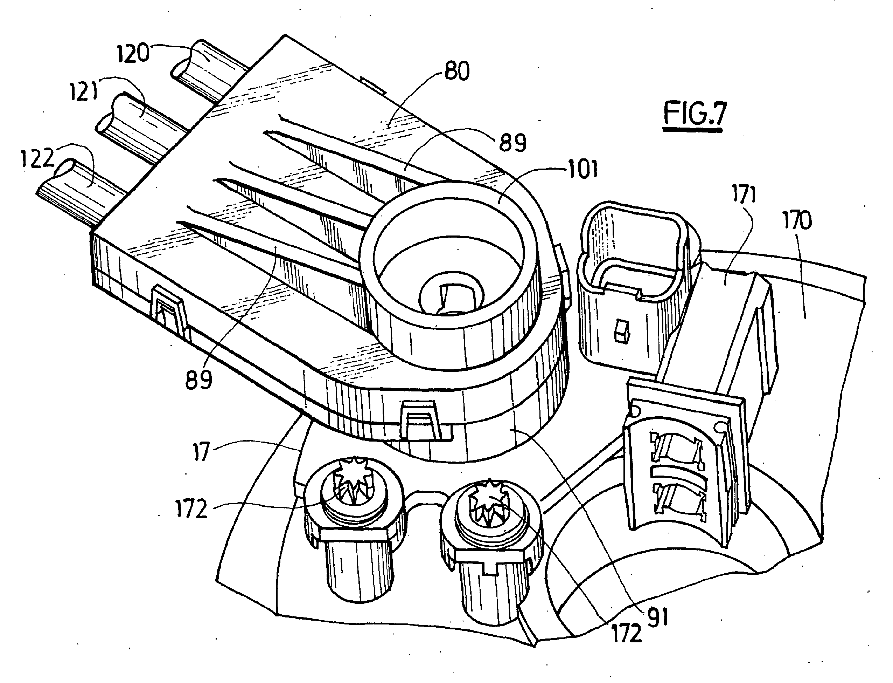

- la figure 7 est une vue en perspective du connecteur selon un autre angle pour montrer les nervures du couvercle presseur.

### Description de modes de réalisation préférentiels de l'invention

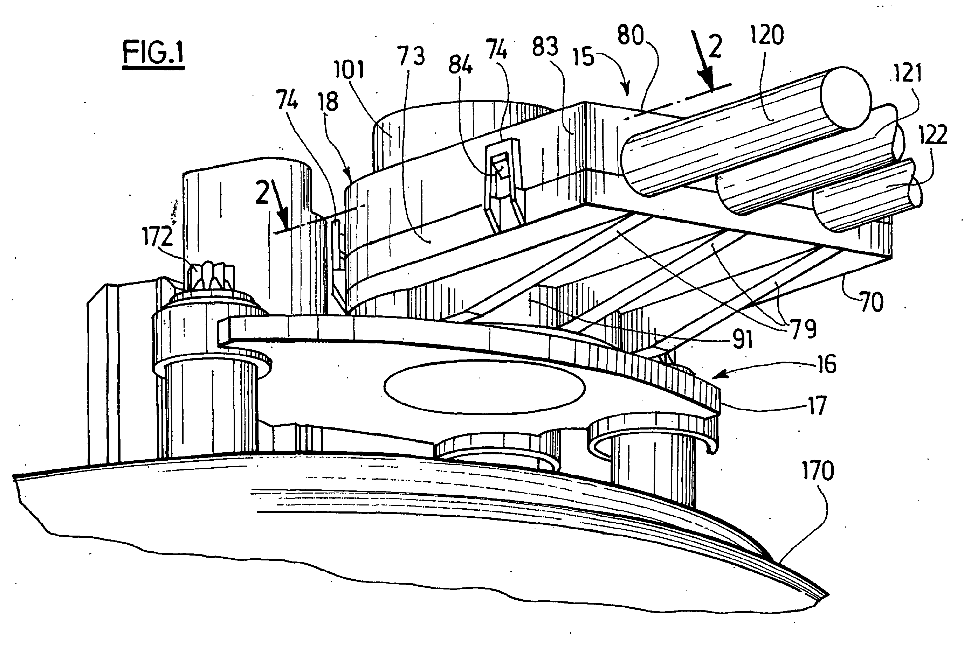

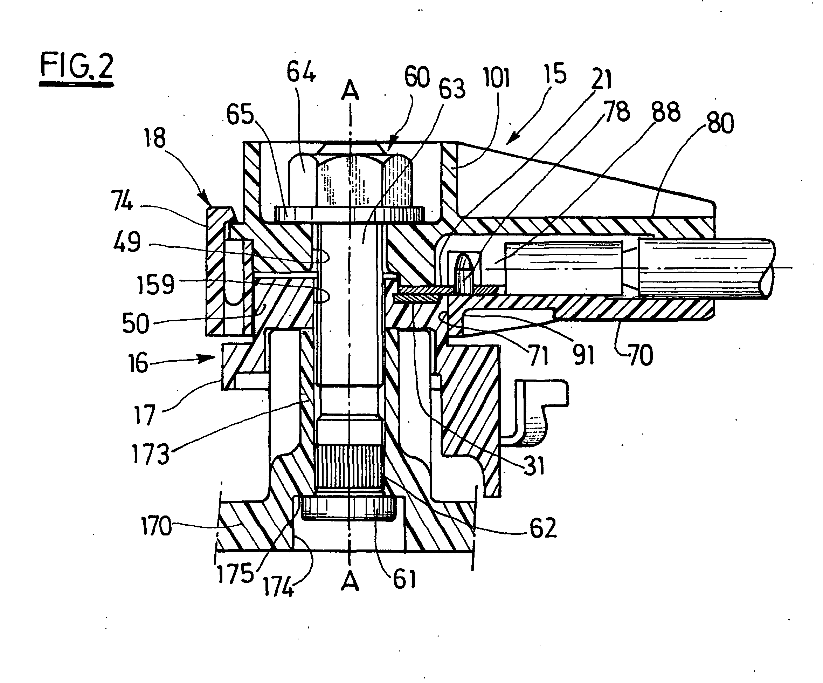

Dans la description, une orientation d'avant en arrière et supérieure et inférieure sera utilisée, elle correspond à l'orientation de gauche à droite et haut et bas conformément aux figures 1 et 2.

On a représenté dans les figures un connecteur selon l'invention qui se compose d'un premier sous-ensemble supérieur 15 relié à des câbles électriques 120,121,122, et d'un second sous-ensemble inférieur 16 relié à l'induit d'une machine électrique tournante, par exemple au stator d'un alternateur de véhicule automobile, qui en variante peut être réversible et fonctionner en moteur électrique pour démarrer le véhicule automobile. Un tel alternateur est appelé alternateur-démarreur.

Ici le connecteur se monte sur le palier arrière 170 d'un alternateur-démarreur, tel que décrit dans le document FR-00 03131 déposé le 10 mars 2000 et publié sous le numéro FR-A-2 806 223 auquel on se reportera pour plus de précisions.

Ce palier arrière 170 porte à fixation un porte-balais 171, dont on n'a pas représenté ici les balais destinés à venir en contact électrique avec des bagues collectrices solidaires d'un arbre portant le rotor, constituant l'inducteur de la machine électrique tournante dans ce cas polyphasée.

Pour ce faire les bagues collectrices sont reliées aux extrémités d'un bobinage d'excitation porté par le rotor usuellement du type Lundell à griffes. En variante le rotor est à pôles saillants comme décrit dans le document PCT/FR/02/00037.

L'extrémité arrière de l'arbre du rotor est portée par le palier arrière présentant centralement un roulement à cet effet.

Le rotor est entouré par le stator de la machine constituant l'induit de celle-ci en étant porté en partie par le palier arrière 170. Le stator comporte, de manière connue, un corps sous la forme d'un paquet de tôles à encoches pour le montage d'enroulements électriquement conducteurs appartenant aux phases que comporte la machine. Les enroulements sont du type à fils ou en variante du type à barres comme décrit dans le document FR 0104770 déposé le 0/5/04/2001. Les sorties de phases sont reliées, ici par sertissage en variante par soudage, chacune à l'une des extrémités de seconds éléments 30,31,32 électriquement conducteurs, que comporte le deuxième sous-ensemble 16 du connecteur selon l'invention. Dans ce mode de réalisation trois éléments 30,31,32 sont prévus et la machine électrique est du type triphasé.

Les extrémités précitées des éléments 30 à 32 consistent en des pattes dénudées de sertissage comme dans le document FR-A-2 754 650.

Ces éléments électriquement conducteurs 30,31,32 consistent en des bandes électriquement conductrices, ici métalliques, noyées dans une pièce électriquement isolante 17 formant un support fixé par des vis 172 sur le palier arrière 170 de la machine. Les vis 172 ont une tête qui prend appui sur le support et traversent chacune une colonne (non référencée dans les figures) pour se visser chacune dans le filetage du palier arrière 170. Les colonnes, formant entretoises sont d'un seul tenant avec le support 17 en étant venues de moulage avec celui-ci et sont donc électriquement isolantes.

Les éléments électriquement conducteurs 30,31,32 présentent à leur autre extrémité des secondes portées 33,34,35 non recouvertes et en contact, ici directement en variante indirectement via une couche intermédiaire, chacune avec une zone de réaction 53,54,55 appartenant au support 17. Ces portées 32 à 35 sont en forme de zones annulaires et sont montées sur la face supérieure d'une protubérance 50 du support 17 portant ici le porte-balais 171 en sorte que les éléments conducteurs 30 à 32 présentent des surélévations an niveau des secondes portées 32 à 35.

Le support 17 est en matière plastique moulable et le porte-balais 171 est venu de moulage avec le support 17.

Le connecteur selon l'invention appartient à un dispositif de connexion intervenant entre le palier arrière et un système de commande des phases de l'induit de la machine monté dans un boîtier électronique.

Ce dispositif de connexion comprend un autre connecteur monté sur ce boîtier électronique et les câbles électriques 121,122,123 relient entre eux les deux connecteurs.

Chaque câble est constitué de fils électriquement conducteurs chacun muni d'une gaine électriquement isolante, qui sont entourés par une gaine commune avec si besoin est présence d'une tresse métallique de blindage électromagnétique du câble électrique.

Selon l'invention le connecteur pour réaliser un raccordement électrique entre, d'une part, un premier sous-ensemble 15 comprenant au moins deux premiers éléments 20,21,22 électriquement conducteurs comprenant chacun une première portée 23,24,25 et, d'autre part, un deuxième sous-ensemble 16 comprenant au moins deux seconds éléments 30,31,32 électriquement conducteurs comprenant chacun une deuxième portée 33,34,35, dans lequel les premières portées 23,24,25 sont destinées à venir en contact électrique avec les secondes portées 33,34,35 par l'une de leur face et en appui avec une zone de pression 43,44,45 appartenant au premier sous-ensemble 15 par leur autre face, tandis que l'autre face des secondes portées 33,34,35 est destinée à venir en appui avec une zone de réaction 53,54,55 appartenant à un support 17 que comporte le deuxième sous-ensemble 16 pour fixation des deuxièmes éléments 30,31,32 et dans lequel des moyens d'assemblage 60 interviennent entre la zone de pression 43,44,45 et la zone de réaction 53,54,55 pour serrer entre celles-ci les premières et les secondes portées 33,34,35-43,44,45 et exercer une pression de contact sur lesdites portées, est **caractérisé en ce que** le premier sous-ensemble 15 comporte un carter 18 de positionnement et de montage à flexion des premiers éléments 20,21,22, et en ce que le carter 18, d'une part, porte la zone de pression 43,44,45 et, d'autre part, comporte en regard de la zone de pression 43,44,45 un orifice 71 pour autoriser un mouvement des premières portées 23, 24, 25.

Dans les figures le carter 18 est délimité, d'une part, par un boîtier de positionnement 70 des premiers éléments 20,21,22 et, d'autre part, par un couvercle presseur 80 comprenant la zone de pression 43,44,45. Ce boîtier 70 comporte en regard de la zone de pression 43,44,45 un orifice 71 pour autoriser un mouvement des premières portées 23,24,25.

Les premiers éléments électriquement conducteurs présentent ainsi à leur extrémité libre des portées flexibles et donc souples.

Le nombre des éléments conducteurs dépend des applications. On peut prévoir deux ou quatre, voir même six éléments conducteurs.

Ici trois premiers et seconds éléments conducteurs sont prévus ce qui réalise un bon compromis entre de bonnes surfaces de contacts des éléments conducteurs, une bonne répartition des pressions et le passage de fortes intensités de courants électriques.

Les zones de pression et de réaction sont fractionnées ici en trois parties respectivement par trois fentes 46 à 48 et trois cloisons d'isolation 56 à 58 décrites ci-après.

Le couvercle 80, le boîtier 70 et le support 17 sont en matière moulable et électriquement isolante, ici en matière plastique, en sorte qu'ils peuvent avoir la forme souhaitée avec de nombreuses fonctions.

Avantageusement on prévoit des nervures 79,89 pour renforcer ces pièces 70,80.

En variante ces matières plastiques sont renforcées par des fibres.

La zone de pression 43,44,45 est en matière électriquement isolante et résistante au fluage pour bien faire fléchir les premiers éléments conducteurs 20 à 22.

Le couvercle 80 est en matière électriquement isolante et résistante au fluage.

La zone de réaction 53,54,55 est en matière électriquement isolante et résistante au fluage pour bien encaisser les efforts de serrage.

La zone de réaction 53,54,55 et le couvercle 80 sont en matière plastique thermodurcissable pour un bon serrage des éléments électriquement conducteurs entre eux.

La matière de la zone de réaction a, dans un mode de réalisation, une plus grande résistance au fluage que la matière du reste du support 17 en sorte que le second sous-ensemble 16 est économique et permet un bon surmoulage du support 17 autour des seconds éléments électriquement conducteurs 30 à 32 par un choix approprié de la matière du reste du support.

En variante le support 17 est en une seule matière et on prévoit des inserts de renfort au niveau de la zone de réaction.

Le boîtier 70 est en matière, ici en matière plastique, moins résistante au fluage que celle du couvercle 80 et est donc économique.

La zone de réaction 53,54,55 consiste ici en une protubérance 50 précitée adaptée à pénétrer dans l'orifice 71 du boîtier 70, qui ainsi ne subit pas d'effort de serrage. La protubérance 50 présente une ouverture centrale 159 pour passage de moyens d'assemblage 60.

La zone de réaction présente, en saillie axiale par rapport à l'axe d'assemblage A-A de le figure 2, des cloisons 56,57,58 d'isolation pour séparer ici circonférentellement les deuxièmes portées 33,34,35 les unes des autres.

Les cloisons d'isolation s'étendent radialement de la périphérie externe de la zone de réaction 53,54,55 jusqu'à un anneau central 159 que présenté en saillie axiale ladite zone de réaction.

L'ouverture centrale de l'anneau 59 prolonge l'ouverture centrale 159 de la protubérance.

L'anneau central 59 et la protubérance 50 sont donc adaptés à être traversés centralement par les moyens d'assemblage 60.

La zone de réaction 53,54,55 est donc intérieurement, c'est-à-dire centralement, creuse pour passage des moyens d'assemblage.

La périphérie externe de la protubérance 50 portant la zone de réaction 53,54,55 est ici de forme cylindrique pour pénétration à jeu de montage dans l'orifice 71 ici en forme de trou circulaire.

La zone de pression 43, 44, 45 consiste en une protubérance axiale issue du couvercle 80 et dirigée vers l'orifice 71.

La zone de pression 43,44,45 est séparée en secteurs annulaires 43,44,45 par des fentes 46,47,48 d'orientation radiale.

La largeur des fentes 46,47,48 est adaptée à l'épaisseur des cloisons 56,57,58 d'isolation de la zone de réaction afin que celles-ci puissent pénétrer dans les fentes 46,47,48.

Ainsi la position angulaire du premier sous-ensemble 15 par rapport au second sous-ensemble est réalisée de manière simple et économique. En rendant dissymétrique la position des cloisons et des fentes, on réalise aisément un détrompeur. La zone de réaction est donc du type mâle pour pénétrer via ses cloisons dans les fentes de la zone de pression du type femelle.

Les secteurs 43,44,45 sont évidés centralement pour pénétration de l'anneau central 59 de la zone de réaction 53,54,55.

La zone de pression 44,43,45 présente centralement une ouverture 49 destinée à être alignée avec l'ouverture 159 et celle de l'anneau central 59 de la zone de réaction 53,54,55 pour passage des moyens d'assemblage 60.

La périphérie externe de la zone de pression 43,44,45 est de forme tubulaire.

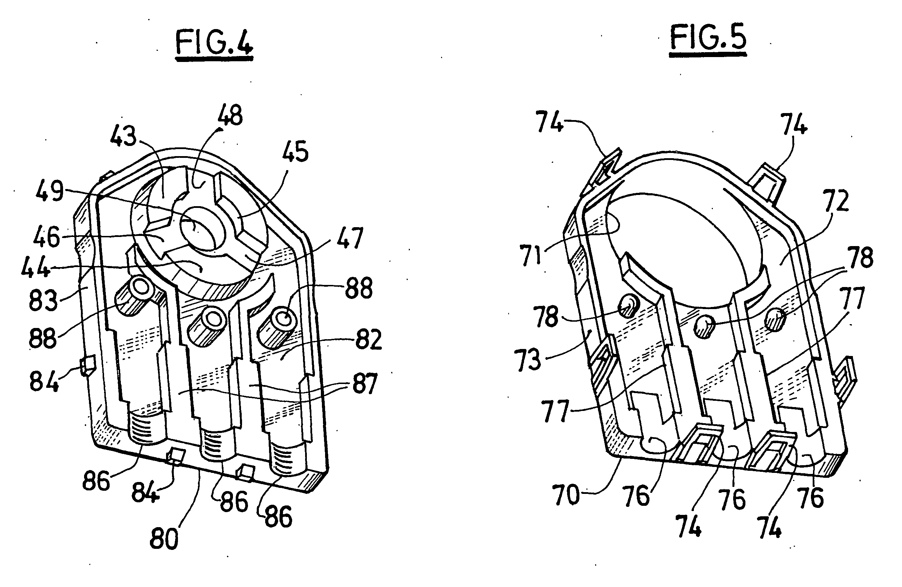

Ici les parties avants du couvercle 80 et du boîtier 70 ont une forme arrondie comme mieux visible dans les figures 4 et 5. La zone de pression et respectivement l'orifice 71 appartient à cette partie avant.

Le couvercle 80 et le boîtier 70 sont de forme creuse et ont globalement la forme la forme d'une barque arrondie à l'avant.

Ainsi qu'on le sait, le passage d'un courant dans un conducteur électrique provoque, par effet Joule, un échauffement du matériau conducteur qui est proportionnel au produit de la résistance du matériau conducteur et du carré de l'intensité du courant. Il est donc nécessaire que la section des premiers éléments conducteurs 20 à 22 soit supérieure à la section minimum pour laquelle la température de ces éléments 20 à 22 atteint une température qui risquerait de mettre feu au connecteur. Il en est de même des seconds éléments conducteurs

Chaque premier élément conducteur permet de relier électriquement une phase électrique du second sous-ensemble inférieur 16 à un fil électrique du câble électrique 120 à 122 concerné.

Dans sa partie arrière, le couvercle presseur 80 présente des moyens de fixation des câbles électriques 120 à 122.

L'extrémité libre arrière du couvercle 80, visible en coupe à la figure 4, comporte des parties de maintien 86 des câbles chacune en forme générale semi-circulaire. Le diamètre interne de la partie de maintien 86 correspond sensiblement au diamètre extérieur du câble électrique 120 à 122 concerné.

Des saillies (non référencées) sont disposées sur la surface intérieure de chaque partie de maintien 86. Les saillies sont agencées en trois rangées parallèles et permettent, lors de la mise en place du câble électrique concerné dans sa partie de maintien 86 associée d'empêcher tout glissement longitudinal du câble électrique par rapport au couvercle 80. Bien entendu le boîtier 70 présente à l'arrière également des parties de maintien 76 complémentaires en vis à vis des parties de maintien 86 du couvercle 80 afin de réaliser des passages circulaires pour les câbles 120 à 122.

Le montage du premier sous-ensemble supérieur 15 est le suivant.

Dans un premier temps il est nécessaire de préparer les câbles électriques 120 à 122. Une partie d'extrémité libre de la gaine est enlevée, de façon à laisser libre les fils électriques sur une longueur donnée. La longueur libre de chaque fil électrique est ajustée de façon à pouvoir effectuer le montage ultérieur dans le boîtier 70. Les extrémités dénudées des câbles sont fixées par des cosses 123 à 125 aux premiers éléments conducteurs. Les cosses appartiennent aux premiers éléments conducteurs de manière décrite ci-après.

Ensuite on monte les câbles équipés des éléments conducteurs dans le boîtier 70 équipé de moyens de positionnement 78 et de cloisons de séparations 77 pour les éléments conducteurs 20 à 22 de manière décrite ci-après.

Enfin on ferme le boîtier à l'aide du couvercle 80 doté de moyens 88 pour éviter un soulèvement des éléments conducteurs 20 à 22 de manière décrite ci-après pour obtenir un premier sous-ensemble 15 manipulable, transportable et imperdable.

Avantageusement, une gaine thermo-rétractable est disposée dans les parties de maintien 86,76 du premier sous-ensemble supérieur 15, ainsi qu'autour de chaque câble électrique 120 à 122 sortant du premier sous-ensemble 15. Après chauffage, la gaine thermo-rétractable assure une bonne étanchéité entre les câbles électriques et le premier sous-ensemble 15.

Le second sous-ensemble inférieur 16, qui est destiné à être accouplé avec le premier sous-ensemble supérieur 15, est fixé sur la machine tournante de manière précitée.

Le support 17 électriquement isolant est agencé au niveau de sa protubérance 50 autour de l'axe d'assemblage A-A de la figure 2, qui est ici d'orientation radiale par rapport à l'axe de rotation de la machine tournante.

Les trois seconds éléments conducteurs de contact 30 à 32 sont isolés électriquement les uns des autres par la matière isolante moulée du support 17. Ils ont chacun une surface active dénudée supérieure horizontale de contact, à savoir leur seconde portée 33 à 35, qui affleure du support. Les surfaces actives sont ici homologues des portées de contact 23 à 25 des premiers éléments conducteurs 20 à 22.

Dans les figures les moyens d'assemblage 60 comportent une unique vis 63 solidaire du second sous-ensemble 16 et un écrou 64 prenant appui sur la face supérieure du couvercle 80 via une rondelle 65. Cette face appartient à un fond 72 que présente le couvercle 80. La vis 63 traverse axialement l'ouverture 49 de la zone de pression ainsi que l'anneau central 59 de la zone de réaction. L'axe de symétrie axiale de la vis 63 constitue l'axe d'assemblage A-A.

La tête 61 de la vis 63 est solidaire ici indirectement en variante directement du support 17.

Ainsi on peut enfiler le premier sous-ensemble 15 avec son carter 18 sur la vis 63 et assurer la fixation à l'aide de l'écrou 64 se vissant sur l'extrémité libre filetée de la vis 63.

D'autres moyens d'assemblage, tels qu'une fixation clipsée par emboîtement élastique, peuvent remplacer la vis d'assemblage 63.

En variante les moyens d'assemblage consistent en un rivet remplaçant la vis 63. Dans ce cas le connecteur est non démontable. La solution avec vis et écrou est préférable car on peut mieux maîtriser le serrage.

L'agencement selon l'invention présente l'avantage de ne pas être sensible aux vibrations grâce au montage à flexion des premiers éléments conducteurs.

De plus, le connecteur est identique, que le couplage des phases de la machine tournante soit en étoile ou en triangle, ce qui permet de standardiser les moules de fabrication du boîtier 70 et du couvercle 80.

On appréciera la compacité géométrique du connecteur permettant de minimiser la longueur des sorties des phases de l'induit appartenant dans le cas d'un alternateur ou d'un alterno-démarreur au stator de la machine tournante.

On appréciera la présence d'un unique moyen d'assemblage 60, entre le carter 18 et le support 17.

Ce moyen d'assemblage, ici électriquement conducteur, permet une répartition uniforme de pression en combinaison avec l'orifice 71 et la zone de pression 43 à 45.

Avantageusement la vis 63 est moletée en 62 au niveau de sa tête 61 inférieure en sorte que la vis peut être insérée à force par son moletage dans un insert noyé dans la protubérance 50 et être ainsi imperdable. De préférence cet insert est relié à la masse. Dans ce cas les moyens d'assemblage sont solidaires du support 17

En variante l'insert est remplacé par un bossage en forme de cheminée 173 venue de moulage avec le palier 170 classiquement à base d'aluminium et servant à son extrémité libre de tuteur à la face inférieure de la protubérance 50 comme visible à la figure 2.

La tête inférieure 61 de la vis 63 prend appui sur un épaulement 175 formé à la faveur d'un lamage 174 réalisé au niveau de la zone d'enracinement de la cheminée 173 au palier 170. La vis 63 traverse la cheminée 173 par son corps ainsi que les zones de réaction et de pression et une rondelle d'appui 65 telle qu'une rondelle Grower ou une rondelle Belleville. La rondelle 65 est en appui sur la face supérieure du couvercle opposée à la zone de pression.

L'écrou d'assemblage 64 est vissé sur l'extrémité libre de la vis au contact de la rondelle d'appui et plaque cette rondelle d'appui au contact de la face supérieure du couvercle 80. Bien entendu la vis 63 présente un moletage 62 au voisinage de sa tête 61 pour son ancrage dans la cheminée, qui présente intérieurement localement une réduction locale de diamètre à cet effet au voisinage de l'épaulement 175 comme visible à la figure 2.La vis 63 est donc imperdable.

En variante l'écrou peut être fixé sur la face supérieure du couvercle et la tête de vis prend appui directement ou indirectement sur le support 17 pour se visser sur l'écrou. En variante on inverse les structures la vis 63 étant solidaire du couvercle 80 et prenant appui par sa tête 61 sur la face supérieure du couvercle 80 en étant emmanchée à force par son moletage 62 dans l'ouverture 49. L'écrou est alors vissé par en dessous et prenant appui via sa rondelle 65 sur l'épaulement 175.

Dans tous les cas les moyens d'assemblage électriquement conducteurs 60 comportent une partie épaulée telle qu'une tête ou un écrou, prenant appui directement ou indirectement sur le couvercle 80 et un corps traversant axialement les zones de pression et de réaction et donc les premiers éléments conducteurs. L'axe de symétrie axiale de ces moyens d'assemblage 60 constitue l'axe d'assemblage A-A de la figure 2.

Dans les figures, le boîtier 70 et le couvercle 80 du carter 18 s'étendent transversalement par rapport à l'axe d'assemblage A-A, de la figure 2, en étant une forme creuse.

Ils présentent chacun un fond 82 respectivement 72 délimité par un rebord périphérique 83 respectivement 73 perpendiculaire au fond 82,73.

La face supérieure du rebord 73 du boîtier 70 est destinée à venir en contact avec la face inférieure du rebord 83 du couvercle 80 en sorte qu'après assemblage de ces deux pièces le carter 18 est étanche. Si besoin est, on peut coller un joint d'étanchéité sur l'un des rebords 73,83 pour parfaire l'étanchéité.

Le couvercle 80 est assemblé, de manière démontable, au boîtier 70 par encliquetage. Pour ce faire, le couvercle 80 présente le long de son rebord 83 des saillies 84, tandis que le boîtier 70 présente le long de son rebord 73 des saillies complémentaires 74 s'étendant perpendiculairement aux saillies 84. Les saillies 74,84 sont ici au nombre de six pour chaque groupe de saillies. On se reportera aux figures 4 et 5 pour leur répartition.

Les saillies 74 issues du rebord 73 du boîtier 70 sont des pattes en forme de U plus hautes que le rebord 73 pour délimiter chacune un évidement de réception de la saillie associée pleine 84 du couvercle 80. Les saillies 84 présentent chacune un pan incliné destiné à coopérer avec le fond du U des pattes 74 et écarter celles-ci lors de l'assemblage du couvercle 80 avec le boîtier 70. Ensuite les pattes 74 se referment dès que le fond du U des pattes 74 est franchi. Bien entendu, on peut inverser les structures, les pattes étant alors issues du rebord 83 et les saillies pleines du rebord 73. Les pattes évidées 74 sont dans tous les cas destinées à venir en prise par encliquetage avec les saillies 84.

En variante l'assemblage du couvercle 80 avec le boîtier 70 est réalisé à l'aide de vis ou de boulons intervenant au niveau des rebords 73,83.

En variante l'assemblage du couvercle 80 avec le boîtier 70 est réalisé de manière non démontable par exemple à l'aide de rivets ou d'un collage ou d'un soudage, tel qu'un soudage du type laser ou par ultrasons, au niveau des rebords 73,83.

La face supérieure du fond 72 du boîtier présente deux cloisons de séparation 77 et il en est de même de la face inférieure du fond 82 du couvercle 80 présentant deux cloisons de séparation 87.

Les cloisons 77,87 ont la même forme et ont chacune une partie avant en forme de secteur circulaire délimitant l'orifice 71, ici circulaire de grande taille. La partie arrière des cloisons 77,87 se raccorde à la partie arrière du rebord 73,83 respectivement du boîtier 70 et du couvercle 80 chacune dans le prolongement respectivement d'une patte 74 pour les cloisons 77 et d'une saillie pleine 84 pour les cloisons 87.

La partie arrière des cloisons 77,87 est plus large que leur partie avant et leur partie intermédiaire de raccordement de la partie avant à la partie arrière.

La partie intermédiaire des cloisons 77,87 a la même largeur que la partie avant et s'étend longitudinalement tout comme la partie arrière qu'elle prolonge.

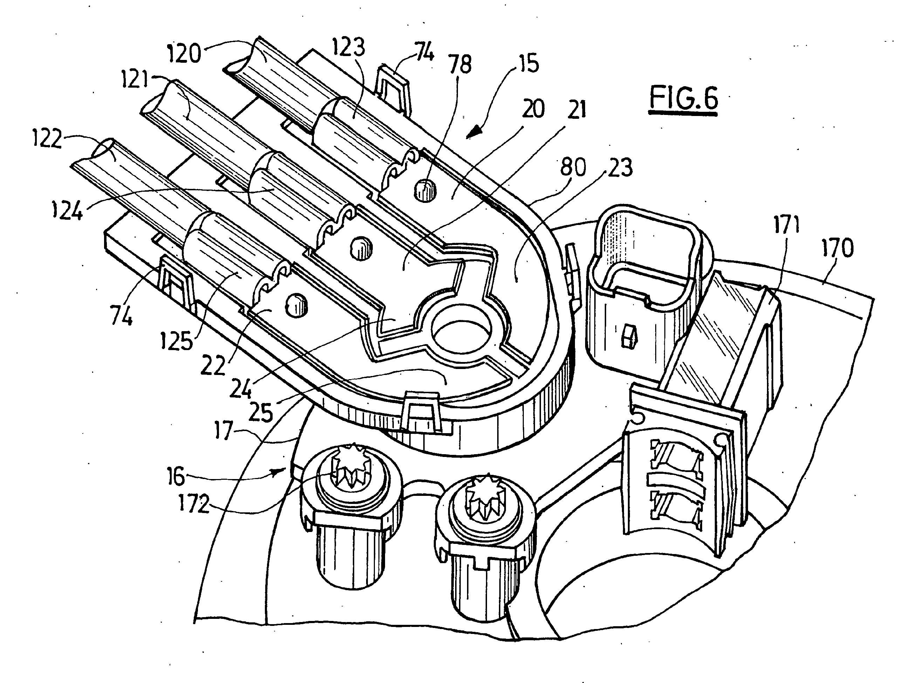

La partie avant des cloisons 77 sert à séparer les premières portées 23 à 25 et à les isoler les unes des autres. Les premières portées ont ici une forme de secteurs annulaires comme mieux visible à la figure 6. Les secteurs sont séparés par des fentes pour passage des cloisons de la zone de réaction.

Les cloisons 77,87 ont une forme homologue. Un jeu existe entre la zone de pression 43 à 45 et les parties avant, d'une part, des cloisons 87 et, d'autre part, du rebord 83. La partie avant du rebord 73 délimite l'orifice ou ouverture 71.

Les parties de maintien 76,86 affectent la partie arrière du rebord 73,83.

Les rebords 73,83 ont une partie arrière perpendiculaire à deux parties longitudinales de raccordement à une partie avant arrondie en sorte qu'ils ont une forme rectangulaire dans laquelle on aurait remplacé l'une des largeurs par une partie ronde constituant la partie avant. Il en est donc de même du boîtier 70 et du couvercle 80. Les parties de maintien 76,86 des câbles 120 à 122 constituent des mâchoires pour lesdits câbles et affectent la partie arrière des rebords 73,83.

Les cloisons 77,87 et les parties longitudinales délimitent les parties de maintien 76,86 comme visible dans les figures 4 et 5.

Ainsi qu'il ressort à l'évidence des figures 4 et 5, les rebords 73,83 et les cloisons 77,87 délimitent trois logements pour le montage à isolation électrique des trois premiers éléments conducteurs 20 à 22, dont les parties avant, en forme de secteur annulaire, définissent les trois premières portées 23 à 25 s'étendant dans l'orifice 71, ici en forme de trou circulaire. Les portées 23 à 25 constituent les extrémités libres des éléments conducteurs 20 à 22.

La partie arrière de chaque premier élément conducteur 20 à 22 présente latéralement des bords, en sorte qu'après rabattement des deux bords la partie arrière de chaque premier élément conducteur 20 à 22 constitue une cosse 123 à 125 venant serrer et fixer les extrémités dénudées de fils électriques des câbles 120 à 122, afin d'assurer un contact électrique.

C'est pour cette raison que les parties arrières des cloisons 77 sont plus larges afin de bien immobiliser les cosses 123 à 125.

Bien entendu le nombre de fils électriques des câbles 120 à 122 dépend des applications.

Les cosses 123 à 125 sont des cosses d'assemblage chacune à un câble électrique.

Les secteurs annulaires constituant les premières portées 23 à 25 ont ici la même étendue et permettent le passage d'une forte intensité de courant électrique sans que le boîtier 70 et le couvercle 80 risquent d'être endommagé ou de prendre feu, en sorte que la configuration à trois éléments conducteurs 20 à 22 est avantageuse car elle permet à encombrement égal le passage d'un courant plus fort qu'avec une disposition par exemple à quatre éléments conducteurs tout en assurant une pression plus équilibrée qu'avec deux ou quatre éléments conducteurs après fixation du connecteur par les moyens d'assemblage 60.

Les premiers éléments conducteurs 20 à 22 consistent en des bandes plates de métal obtenues par découpe à partir d'une plaque métallique électriquement conductrice. Ces bandes sont en forme de languettes flexibles.

Chaque premier élément conducteur 20 à 22 présente une partie intermédiaire raccordant sa partie avant à sa partie arrière en forme de cosse. Les parties intermédiaires sont destinées à venir en appui contre le fond 72 du boîtier 70.

Chaque partie intermédiaire comporte un trou (non référencé) dans lequel pénètre un renflement de matière 78 venu de moulage avec le fond 72 du boîtier 70.

Les trois renflements 78, à raison d'un renflement par logement d'un câble, sont en forme de pions à extrémité de forme pénétrante, ici en forme d'ogive, pour la traversée des trois des éléments conducteurs 20 à 22.

Ainsi il est constitué des moyens de positionnement des premiers éléments conducteurs 20 à 22 avant fermeture du boîtier 70 par le couvercle 80 comme visible à la figure 6, en sorte que le boîtier 70, avec ses cloisons de séparation 77, et son rebord 73, constitue un boîtier de positionnement des premiers éléments électriquement conducteurs 20 à 22.

Le couvercle 80 présente trois douilles saillantes 88 issues par moulage de la face inférieure de son fond 82. Les douilles 88 sont destinées à servir chacune de réceptacle à un renflement 78 et à venir en appui sur le premier élément conducteur 20 à 25 concerné comme visible à la figure 2. Les renflements 78 pénètrent ici à jeu dans les douilles 88 fermées par le fond 82.

Grâce à cet agencement chaque première portée 23 à 25 peut fléchir comme une poutre puisqu'elle peut pénétrer dans l'orifice 71 et que la partie intermédiaire de chaque premier élément conducteur 20 à 22 est prise en sandwich entre le fond 72 du boîtier 70 et les douilles 88 constituant une forme de moyens anti-soulèvement des premiers éléments conducteurs 20 à 22.

Bien entendu les moyens d'anti-soulèvement 88 du couvercle 80 et les moyens de positionnement 78 du boîtier 70 peuvent avoir une autre forme. Par exemple les premiers éléments conducteurs 20 à 22 peuvent présenter pour au moins l'un d'entre eux latéralement une entaille dans laquelle pénètre une saillie issue du boîtier 70. Les moyens de positionnement consistent alors en deux saillies latérales, tandis que les moyens d'anti-soulèvement peuvent consister alors en une saillie pleine issue du couvercle 80 et s'étendant entre les saillies latérales du boîtier 70. Dans les deux cas les moyens d'anti-soulèvement consistent en une butée issue du couvercle 80. Toutes les formes du boîtier et du couvercle sont obtenues aisément par moulage du fait que ceux-ci sont en matière plastique moulable.

On en profite alors pour doter les faces respectivement inférieure et supérieure des fonds 72,82 de nervure de rigidification 79,89 de hauteur décroissante vers l'arrière.

Certaines au moins des nervures 79,89 se raccordent à une jupe annulaire orientée 91,101 axialement selon l'axe A-A d'assemblage. Ces jupes ont une forme cylindrique.

La jupe supérieure 101 du couvercle 80 délimite une cavité de réception d'une des extrémités des moyens d'assemblage, ici l'écrou 64 et sa rondelle 65. Cette cavité est ouverte vers l'extérieur et présente un fond doté d'une ouverture destinée à être traversée de manière précitée par les vis 63 des moyens d'assemblage 60. Le fond de la cavité appartient au fond 82 et donc à la face supérieure du couvercle 80.

La jupe 91 du boîtier a un diamètre interne égal à celui de l'orifice 71 ici circulaire.

La jupe 91 prolonge donc intérieurement axialement vers le bas l'orifice 71.

Cette jupe 91 sert de réceptacle à la zone de réaction 53 à 55 et donc à la protubérance 50 creuse portant au niveau de sa face supérieure les portées 33 à 35.

Le diamètre externe de la jupe périphérique de la protubérance 50 est égal au jeu de montage près au diamètre interne de la jupe 91 en sorte que le montage est étanche.

Le premier sous-ensemble est de faible épaisseur et se loge aisément, ici à l'arrière de la machine électrique tournante, compte tenu que le système de commande n'est pas monté à cet endroit.

Le premier sous-ensemble 15 occupe l'espace radial disponible à cet endroit.

On appréciera la simplicité des premiers éléments conducteurs 20 à 22, ainsi que leur faible coût et leur liaison électrique fiable avec les câbles grâce aux cosses 123 à 125.

On tire parti de la forme plate, sauf à l'arrière, des premiers éléments conducteurs en forme de lame pour faire fléchir à l'avant ces éléments conducteurs afin que ceux-ci viennent en contact avec les secondes portées.

Bien entendu l'invention n'est pas limitée aux exemples de réalisation représentés.

Ainsi le couvercle 80 peut être bi-matière et comporter une partie inférieure en matière électriquement isolante, surmoulée sur une partie supérieure métallique.

Le boîtier peut être bi-matière et comporter une partie supérieure en matière électriquemrent isolante surmoulée sur une partie inférieure métallique. La zone de pression avec ou sans la jupe 101 est en variante rapportée sur le reste du couvercle 80 par exemple par surmoulage, collage, clipsage (encliquetage) ou soudage, par exemple du type à ultrasons ou laser, sur le reste du couvercle, qui dans tous les cas porte la zone de pression. Ici le boîtier et le couvercle ne sont pas renforcés par des fibres pour des raisons économiques, en variante on peut prévoir des fibres de renforcement. En variante le carter 18 avec la jupe 91 et l'orifice 71 est réalisé par surmoulage sur les premiers éléments électriquement conducteurs, dont les premières portées sont apparentes au niveau de l'orifice 71. Dans ce cas la zone de pression est rapportée de manière précitée(surmoulage, clipsage, collage, soudage..etc) sur le carter. Le carter porte dans tous les cas la zone de pression.

Bien entendu le couvercle peut comporter une zone de pression résistante au fluage et le reste en une matière moins résistante au fluage et renforcée par des fibres. Cette zone de pression est dans une variante munie à son extrémité libre d'une couche ou plus généralement d'un revêtement par exemple d'une dureté plus grande. La zone de pression a ici un diamètre externe au plus égal à celui de l'orifice 71 pour que les portées 23 à 25 puissent pénétrer dans l'orifice 71. Son diamètre externe est ici égale au diamètre externe de la protubérance 50, en variante il est inférieur à celui de la protubérance.

La partie intermédiaire des cloisons 77,87 peut être supprimée sachant que la partie arrière de celles-ci retient les cosses 123 à 125.

Bien entendu la hauteur des cloisons 77,87, des renflements 78 et des douilles 88, tous perpendiculaires aux fonds 72,82, est telle que les rebords 73,83 puissent venir au contact l'un de l'autre.

La jupe 91 permet de guider la protubérance 50 et donc la zone de réaction. Lors de l'assemblage à l'aide des moyens 60, les portées 23 à 25 sont pressées par la zone de pression (et donc par la protubérance du couvercle constituant celle-ci) et fléchissent en s'engageant dans l'orifice 71 prolongé par la jupe 91 de forme cylindrique.

Après assemblage les portées 23 à 25 sont sous contrainte et épousent la forme des secondes portées 33 à 35. Cela permet de rattraper les défauts de planéité et les tolérances de fabrication.

Un mouvement de flexion des portées 23 à 25 a donc lieu lors de l'assemblage des deux sous-ensembles 15-16. On appréciera que le boîtier 70 n'est pas soumis aux efforts engendrés par les moyens d'assemblage.

En variante les zones de pression et de réaction peuvent être cylindriques à section carrée ou rectangulaire en sorte que l'orifice peut être de section carrée ou rectangulaire. Des sections polygonales sont également envisageables pour l'orifice et les zones de pression et de réaction. Dans tous les cas les zones de pression et de réaction (et donc la protubérance) ont en section une taille inférieure ou égale à celle de l'orifice 71.

Le deuxième sous-ensemble 16 avec son support 17 est bien adapté à être monté dans un alternateur-démarreur du type de celui décrit dans le document FR-A-2 806 224. Pour plus de précisions on se reportera à la figure 8 de ce document montrant le deuxième sous-ensemble avec son support monté sur le palier arrière ainsi qu'un porte-capteurs présentant des oreilles avec des ouvertures oblongues pour sa fixation à réglage angulaire sur le palier arrière. Ce palier arrière présente des ouvertures pour détection par les capteurs de cibles magnétiques solidaires d'un porte-cibles implanté entre le rotor et le palier arrière.

Ce palier arrière est solidaire d'un palier avant, par exemple à l'aide de vis ou de tirants, portant centralement à la faveur d'un roulement à billes l'extrémité avant de l'arbre du rotor sur laquelle est fixée une poulie reliée par un dispositif de transmission, comportant au moins une courroie, à un arbre menant du moteur à combustion interne du véhicule automobile.

Les paliers sont ajourés pour circulation d'air de refroidissement engendrés par la rotation de ventilateurs internes portés par les extrémités du rotor. Les paliers ont une forme creuse et portent centralement à la faveur de roulements à billes l'arbre portant le rotor et à leur périphérie externe le corps du stator. Ces paliers, avantageusement en aluminium, assurent un retour à la masse et présentent des oreilles de fixation et de réglage sur une partie fixe du véhicule automobile. En variante l'alternateur-démarreur est refroidi par eau en sorte que les paliers sont dotés de chambres pour circulation d'un liquide de refroidissement, usuellement l'eau de refroidissement du moteur du véhicule.

Le deuxième sous-ensemble est alors solidaire d'un support qui porte également le porte-balais.

Le connecteur selon l'invention appartient alors à un dispositif de connexion entre la machine et un boîtier électronique comportant un module électronique de commande et de contrôle doté également d'une unité de commande et de gestion.

La machine est alors réversible et peut travailler en mode moteur électrique pour démarreur le véhicule et en mode alternateur pour recharger la batterie du véhicule et alimenter les consommateurs du véhicule.

Pour plus de précisions, on se reportera au document précité.

Le connecteur selon l'invention est bien adapté pour une machine électrique tournante fonctionnant à une tension de 42V.

## Revendications

1. Connecteur pour réaliser un raccordement électrique entre, d'une part, un premier sous-ensemble (15) comprenant au moins deux premiers éléments (20,21,22) électriquement conducteurs comprenant chacun une première portée (23,24,25) et, d'autre part, un deuxième sous-ensemble (16) comprenant au moins deux seconds éléments (30,31,32) électriquement conducteurs comprenant chacun une deuxième portée (33,34,35), dans lequel les premières portées (23,24,25) sont destinées à venir en contact électrique avec les secondes portées (33,34,35) par l'une de leur face et en appui avec une zone de pression (43,44,45) appartenant au premier sous-ensemble (15) par leur autre face, tandis que l'autre face des secondes portées (33,34,35) est destinée à venir en appui avec une zone de réaction (53,54,55) appartenant à un support (17) que comporte le deuxième sous-ensemble (16) pour fixation des deuxièmes éléments (30,31,32) et dans lequel des moyens d'assemblage (60) interviennent entre la zone de pression (43,44,45) et la zone de réaction (53,54,55) pour serrer entre celles-ci les premières et les secondes portées (23,24,25;33,34,35) et exercer une pression de contact sur lesdites portées, **caractérisé en ce que** le premier sous-ensemble (15) comporte un carter (18) de positionnement et de montage à flexion des premiers éléments conducteurs (20,21,22) et **en ce que** le carter, d'une part, porte la zone de pression,(43,44,45) et d'autre part, comporte en regard de la zone de pression (43,44,45) un orifice (71) pour autoriser un mouvement des premières portées (23,24,25).

2. Connecteur selon la revendication 1, **caractérisé en ce que** le carter (18) est délimité, d'une part, par un boîtier de positionnement (70) des premiers éléments conducteurs (20,21,22) et, d'autre part, par un couvercle presseur (80) portant la zone de pression (43,44,45), **en ce que** le boîtier (70) comporte en regard de la zone de pression (43,44,45) un orifice (71) pour autoriser un mouvement des premières portées (23,24,25) et **en ce que** des moyens de fixation (74,84) interviennent entre le boîtier (74) et le couvercle (80).

3. Connecteur selon la revendication 2, **caractérisé en ce que** le couvercle (80), le boîtier (70) et le support (17) sont en matière moulable et électriquement isolante.

4. Connecteur selon la revendication 3, **caractérisé en ce que** le boîtier (70) est en matière moins résistante au fluage que celle du couvercle (80).

5. Connecteur selon la revendication 1, **caractérisé en ce que** la zone de pression (43,44,45) et la zone de réaction (53,54,55) sont en matière électriquement isolante et résistante au fluage.

6. Connecteur selon la revendication 5, **caractérisé en ce que** la zone de réaction (53,54,55) consiste en une protubérance (50) dont la section est de taille inférieure ou égale à celle de l'orifice (71) du carter (18) et **en ce que** la zone de pression (43, 44, 45) consiste en une protubérance issue du carter (18) et dirigée vers l'orifice (71).

7. Connecteur selon la revendication 6, **caractérisé en ce que** la zone de réaction présente en saillie des cloisons (56,57,58) d'isolation pour séparer les deuxièmes portées (33,34,35) les unes des autres, tandis que la zone de pression (43,44,45) est séparée en secteurs (43,44,45) par des fentes (46,47,48) d'orientation radiale et **en ce que** la largeur des fentes (46,47,48) est adaptée à l'épaisseur des cloisons (56,57,58) d'isolation afin que celles-ci puissent pénétrer dans les fentes (46,47,48).

8. Connecteur selon la revendication 6, **caractérisé en ce que** la périphérie externe de la zone de réaction (53,54,55) est de forme cylindrique et est adaptée à pénétrer dans une jupe cylindrique (91) que présente le carter (18) et **en ce que** la jupe (91) intérieurement prolonge l'orifice (71) de forme circulaire.

9. Connecteur selon la revendication 1, **caractérisé en ce que** les moyens d'assemblage (60) comportent une partie épaulée (61,64) prenant appui sur le carter (18) et un corps traversant axialement les zones de pression (43 à 45) et de réaction (53 à 55) et les premiers éléments conducteurs (20 à 22).

10. Connecteur selon la revendication 2, **caractérisé en ce que** le boîtier (70) comporte des moyens de positionnement (78) pour les premiers éléments conducteurs (20 à 22) et **en ce que** le couvercle (80) présente des moyens (88) pour éviter un soulèvement des premiers éléments électriquement conducteurs (20 à 22 ).

11. Connecteur selon la revendication 10, **caractérisé en ce que** le boîtier (70) présente un fond (72) doté d'au moins deux renflements (78) constituants les moyens de positionnement et adaptés chacun à pénétrer dans une ouverture d'un premier élément électriquement conducteur pour positionner celui-ci et **en ce que** le couvercle présente un fond (82) doté de douilles saillantes (88) pour pénétration dans chacune de celles-ci d'un renflement (78) et créer un moyen évitant un soulèvement des premiers éléments électriquement conducteurs (20 à 22).

12. Connecteur selon la revendication 1, **caractérisé en ce que** les premiers éléments conducteurs (20 à 22) s'étendent perpendiculairement à l'axe des moyens d'assemblage constituant l'axe d'assemblage et **en ce que** lesdits premiers éléments conducteurs sont en forme de bandes métalliques présentant chacune à l'avant une première portée (23 à 25) et à l'arrière une cosse d'assemblage (123 à 125) à un câble électrique (120 à 122).

13. Connecteur selon la revendication 1, **caractérisé en ce qu'**il comporte trois premiers éléments et trois seconds électriquement conducteurs (20 à 22;23 à 25).

14. Connecteur selon la revendication 2, **caractérisé en ce que** le boîtier (70) présente des cloisons de séparation (77) pour les premiers éléments électriquement conducteurs (20 à 22).

15. Connecteur selon la revendication 2, **caractérisé en ce que** le couvercle (80) et le boîtier (70) ont une forme creuse et présente chacun un fond (72,82) délimité par un rebord périphérique (73,83) perpendiculaire audit fond et **en ce que** les moyens de fixation comportent des pattes saillantes évidées(74) issues de l'un des rebords du couvercle (80) et du boîtier (70) et destinées à venir en prise par encliquetage avec des saillies (84) issues de l'autre rebord du boîtier (70) et du couvercle (80).

16. Connecteur selon la revendication 15, **caractérisé en ce que** les rebords (73,83) présentent à l'avant une forme arrondie au voisinage de l'orifice (71) du boîtier (70) en forme de trou circulaire et à l'arrière de manière complémentaire des parties de maintien pour des câbles électriques (120 à 122).

17. Connecteur selon la revendication 2,**caractérisé en ce que** le couvercle (80) et le boîtier présentent chacun des nervures de rigidification (89,79) et une jupe annulaire (101,91) pour respectivement réception d'une des extrémités des moyens d'assemblage (60) et de la zone de réaction (53 à 55).

18. Machine électrique tournante polyphasée, comportant un palier arrière (170), **caractérisé en ce que** le palier arrière (170) porte le support (17) du deuxième sous-ensemble (16) d'un connecteur selon la revendications 1 sur lequel se monte le premier sous-ensemble.

## Claims

1. Connector for producing an electrical connection between, on the one hand, a first subassembly (15) comprising at least two first electrically conductive elements (20,21,22) each having a first reach (23,24,25) and, on the other hand, a second subassembly (16) comprising at least two second electrically conductive elements (30,31,32) each having a second reach (33,34,35), in which the first reaches (23,24,25) are intended to come into electrical contact with the second reaches (33,34,35) by one of their faces and bearing with an area of pressure (43,44,45) belonging to the first subassembly (15) by their other face, while the other face of the second reaches (33,34,35) is intended to come to bear on an area of reaction (53,54,55) belonging to a support (17) included in the second subassembly (16) for fixing the second elements (30,31,32) and in which assembly means (60) operate between the area of pressure (43,44,45) and the area of reaction (53,54,55) to tighten between them the first and the second reaches (23,24,25; 33,34,35) and exert a contact pressure on said reaches, **characterized in that** the first subassembly (15) has a housing (18) for positioning and mounting with deflection the first conductive elements (20,21,22) and **in that** the housing, on the one hand, bears the area of pressure (43,44,45) and, on the other hand, includes, facing the area of pressure (43,44,45), an orifice (71) to allow a movement of the first reaches (23,24,25).

2. Connector according to Claim 1, **characterized in that** the housing (18) is delimited, on the one hand, by a module for positioning (70) the first conductive elements (20,21,22) and, on the other hand, by a pressing cover (80) bearing the area of pressure (43,44,45), **in that** the module (70) includes, facing the area of pressure (43,44,45), an orifice (71) to allow a movement of the first reaches (23,24,25) and **in that** the fixing means (74,84) operate between the module (70) and the cover (80).

3. Connector according to Claim 2, **characterized in that** the cover (80), the module (70) and the support (17) are made of a mouldable and electrically insulating material.

4. Connector according to Claim 3, **characterized in that** the module (70) is made of a material that is less resistant to creep than that of the cover (80).

5. Connector according to Claim 1, **characterized in that** the area of pressure (43,44,45) and the area of reaction (53,54,55) are made of electrically insulating and creep-resistant material.

6. Connector according to Claim 5, **characterized in that** the area of reaction (53,54,55) consists of a protuberance (50) whose section is of a size less than or equal to that of the orifice (71) of the housing (18) and **in that** the area of pressure (43,44,45) consists of a protuberance from the housing (18) and directed towards the orifice (71).

7. Connector according to Claim 6, **characterized in that** the area of reaction has projecting isolation partitions (56,57,58) for segregating the second reaches (33,34,35) from one another, while the area of pressure (43,44,45) is segregated into sectors (43,44,45) by radially oriented slots (46,47,48) and **in that** the width of the slots (46,47,48) is matched to the thickness of the isolation partitions (56,57,58) so that they can penetrate into the slots (46,47,48).

8. Connector according to Claim 6, **characterized in that** the external periphery of the area of reaction (53,54,55) is of cylindrical shape and is designed to penetrate into a cylindrical skirt (91) of the housing (18) and **in that** the skirt (91) internally extends the orifice (71) of circular shape.

9. Connector according to Claim 1, **characterized in that** the assembly means (60) include a shouldered part (61,64) bearing on the housing (18) and a body passing axially through the areas of pressure (43 to 45) and of reaction (53 to 55) and the first conductive elements (20 to 22).

10. Connector according to Claim 2, **characterized in that** the module (70) includes positioning means (78) for the first conductive elements (20 to 22) and **in that** the cover (80) has means (88) to prevent a lifting of the first electrically conductive elements (20 to 22).

11. Connector according to Claim 10, **characterized in that** the module (70) has a bottom (72) provided with at least two bulges (78) forming positioning means and each designed to penetrate into an opening of a first electrically conductive element to position the latter and **in that** the cover has a bottom (82) provided with projecting bushes (88) for each of the latter to be penetrated by a bulge (78) and create a means preventing a lifting of the first electrically conductive elements (20 to 22).

12. Connector according to Claim 1, **characterized in that** the first conductive elements (20 to 22) extend perpendicularly to the axis of the assembly means forming the axis of assembly and **in that** said first conductive elements are in the form of metallic strips each having, at the front, a first reach (23 to 25) and, at the rear, a terminal (123 to 125) for attaching an electrical cable (120 to 122).

13. Connector according to Claim 1, **characterized in that** it includes three first and three second electrically conductive elements (20 to 22; 23 to 25).

14. Connector according to Claim 2, **characterized in that** the module (70) has segregation partitions (77) for the first electrically conductive elements (20 to 22).

15. Connector according to Claim 2, **characterized in that** the cover (80) and the module (70) have a hollow shape and each has a bottom (72,82) delimited by a peripheral flange (73,83) perpendicular to said bottom and **in that** the fixing means comprise openwork projecting tabs (74) from one of the flanges of the cover (80) and of the module (70) and intended to be snap-fitted with projections (84) from the other flange of the module (70) and of the cover (80).

16. Connector according to Claim 15, **characterized in that** the flanges (73,83) have, at the front, a rounded shape in the vicinity of the orifice (71) of the module (70) in the form of a circular hole and, at the rear, in a complementary manner, securing parts for electrical cables (120 to 122).

17. Connector according to Claim 2, **characterized in that** the cover (80) and the module each have stiffening ribs (89,79) and an annular skirt (101,91) to respectively receive one of the ends of the assembly means (60) and of the area of reaction (53 to 55).

18. Polyphase rotating electrical machine, including a rear bearing (170), **characterized in that** the rear bearing (170) bears the support (17) of the second subassembly (16) of a connector according to Claim 1 on which the first subassembly is mounted.

## Patentansprüche

1. Verbinder zum Herstellen einer elektrischen Verbindung zwischen einerseits einer ersten Untereinheit (15), die mindestens zwei erste elektrisch leitende Elemente (20, 21, 22) enthält, welche je eine erste Auflagefläche (23, 24, 25) enthalten, und andererseits einer zweiten Untereinheit (16), die mindestens zwei zweite elektrisch leitende Elemente (30, 31, 32) enthält, welche je eine zweite Auflagefläche (33, 34, 35) enthalten, wobei die ersten Auflageflächen (23, 24, 25) dazu bestimmt sind, über eine ihre Seiten mit den zweiten Auflageflächen (33, 34, 35) in elektrischen Kontakt zu kommen, und über ihre andere Seite mit einer zur ersten Untereinheit (15) gehörenden Druckzone (43, 44, 45) in Auflage zu kommen, während die andere Seite der zweiten Auflageflächen (33, 34, 35) dazu bestimmt ist, mit einer Reaktionszone (53, 54, 55) in Auflage zu kommen, die zu einem Träger (17) gehört, den die zweite Untereinheit (16) zur Befestigung der zweiten Elemente (30, 31, 32) aufweist, und bei dem Zusammenfügungseinrichtungen (60) zwischen der Druckzone (43, 44, 45) und der Reaktionszone (53, 54, 55) eingreifen, um zwischen diesen die ersten und die zweiten Auflageflächen (23, 24, 25; 33, 34, 35) einzuspannen und einen Kontaktdruck auf die Auflageflächen auszuüben, **dadurch gekennzeichnet, dass** die erste Untereinheit (15) einen Kasten (18) zur Positionierung und zum biegbaren Einbau der ersten leitenden Elemente (20, 21, 22) aufweist, und dass der Kasten einerseits die Druckzone (43, 44, 45) trägt und andererseits gegenüber der Druckzone (43, 44, 45) eine Öffnung (71) aufweist, um eine Bewegung der ersten Auflageflächen (23, 24, 25) zu erlauben.

2. Verbinder nach Anspruch 1, **dadurch gekennzeichnet, dass** der Kasten (18) einerseits von einem Positioniergehäuse (70) der ersten leitenden Elemente (20, 21, 22) und andererseits von einem Druckdeckel (80) begrenzt wird, der die Druckzone (43, 44, 45) trägt, dass das Gehäuse (70) gegenüber der Druckzone (43, 44, 45) eine Öffnung (71) aufweist, um eine Bewegung der ersten Auflageflächen (23, 24, 25) zu erlauben, und dass Befestigungseinrichtungen (74, 84) zwischen dem Gehäuse (70) und dem Deckel (80) eingreifen.

3. Verbinder nach Anspruch 2, **dadurch gekennzeichnet, dass** der Deckel (80), das Gehäuse (70) und der Träger (17) aus formbarem und elektrisch isolierendem Material sind.

4. Verbinder nach Anspruch 3, **dadurch gekennzeichnet, dass** das Gehäuse (70) aus einem weniger kriechfesten Material als dasjenige des Deckels (80) ist.

5. Verbinder nach Anspruch 1, **dadurch gekennzeichnet, dass** die Druckzone (43, 44, 45) und die Reaktionszone (53, 54, 55) aus elektrisch isolierendem und kriechfestem Material sind.

6. Verbinder nach Anspruch 5, **dadurch gekennzeichnet, dass** die Reaktionszone (53, 54, 55) aus einem Vorsprung (50) besteht, dessen Querschnitt eine Größe hat, die geringer als die oder gleich derjenigen der Öffnung (71) des Kastens (18) ist, und dass die Druckzone (43, 44, 45) aus einem Vorsprung besteht, der vom Kasten (18) stammt und zur Öffnung (71) gerichtet ist.

7. Verbinder nach Anspruch 6, **dadurch gekennzeichnet, dass** die Reaktionszone vorstehende Isolationstrennwände (56, 57, 58) aufweist, um die zweiten Auflageflächen (33, 34, 35) voneinander zu trennen, während die Druckzone (43, 44, 45) durch Schlitze (46, 47, 48) mit radialer Ausrichtung in Sektoren (43, 44, 45) getrennt ist, und dass die Breite der Schlitze (46, 47, 48) an die Dicke der Isolationstrennwände (56, 57, 58) angepasst ist, damit diese in die Schlitze (46, 47, 48) eindringen können.

8. Verbinder nach Anspruch 6, **dadurch gekennzeichnet, dass** der Außenumfang der Reaktionszone (53, 54, 55) von zylindrischer Form und geeignet ist, in eine zylindrische Schürze (91) einzudringen, die der Kasten (18) aufweist, und dass die Schürze (91) innen die kreisförmige Öffnung (71) verlängert.

9. Verbinder nach Anspruch 1, **dadurch gekennzeichnet, dass** die Zusammenfügungseinrichtungen (60) einen mit Schulter versehenen Teil (61, 64), der auf dem Kasten (18) aufliegt, und einen Körper aufweisen, der die Druck- (43 bis 45) und Reaktionszonen (53 bis 55) und die ersten leitenden Elemente (20 bis 22) axial durchquert.

10. Verbinder nach Anspruch 2, **dadurch gekennzeichnet, dass** das Gehäuse (70) Positioniereinrichtungen (78) für die ersten leitenden Elemente (20 bis 22) aufweist, und dass der Deckel (80) Einrichtungen (88) aufweist, um ein Anheben der ersten elektrisch leitenden Elemente (20 bis 22) zu verhindern.

11. Verbinder nach Anspruch 10, **dadurch gekennzeichnet, dass** das Gehäuse (70) einen Boden (72) aufweist, der mit mindestens zwei Verdickungen (78) versehen ist, die die Positioniereinrichtungen bilden und jede geeignet sind, um in eine Öffnung eines ersten elektrisch leitenden Elements einzudringen, um dieses zu positionieren, und dass der Deckel einen Boden (82) aufweist, der mit vorstehenden Buchsen (88) versehen ist, in jede von denen eine Verdickung (78) eindringt und eine Einrichtung erzeugt wird, die ein Anheben der ersten elektrisch leitenden Elemente (20 bis 22) verhindert.

12. Verbinder nach Anspruch 1, **dadurch gekennzeichnet, dass** die ersten leitenden Elemente (20 bis 22) sich lotrecht zur Achse der Zusammenfügungseinrichtungen erstrecken, die die Zusammenfügungsachse bildet, und dass die ersten leitenden Elemente in Form von Metallbändern vorliegen, die je vorne eine erste Auflagefläche (23 bis 25) und hinten einen Kabelschuh (123 bis 125) zum Zusammenfügen mit einem elektrischen Kabel (120 bis 122) aufweisen.

13. Verbinder nach Anspruch 1, **dadurch gekennzeichnet, dass** er drei erste und drei zweite elektrisch leitende Elemente (20 bis 22; 23 bis 25) aufweist.

14. Verbinder nach Anspruch 2, **dadurch gekennzeichnet, dass** das Gehäuse (70) Trennwände (77) für die ersten elektrisch leitenden Elemente (20 bis 22) aufweist.

15. Verbinder nach Anspruch 2, **dadurch gekennzeichnet, dass** der Deckel (80) und das Gehäuse (70) eine vertiefte Form haben und je einen Boden (72, 82) aufweisen, der von einer Umfangsrandleiste (73, 83) lotrecht zum Boden begrenzt wird, und dass die Befestigungseinrichtungen vorstehende ausgehöhlte Laschen (74) aufweisen, die von einer der Randleisten des Deckels (80) und des Gehäuses (70) stammen und dazu bestimmt sind, durch Einrasten mit Vorsprüngen (84), die von der anderen Randleiste des Gehäuses (70) und des Deckels (80) stammen, in Eingriff zu kommen.

16. Verbinder nach Anspruch 15, **dadurch gekennzeichnet, dass** die Randleisten (73, 83) vorne eine abgerundete Form in der Nähe der Öffnung (71) des Gehäuses (70) in Form eines kreisförmigen Lochs und hinten in komplementärer Weise Haltebereiche für elektrische Kabel (120 bis 122) aufweisen.

17. Verbinder nach Anspruch 2, **dadurch gekennzeichnet, dass** der Deckel (80) und das Gehäuse je Versteifungsrippen (89, 79) und eine ringförmige Schürze (101, 91) aufweisen, jeweils zur Aufnahme eines der Enden der Zusammenfügungseinrichtungen (60) bzw. der Reaktionszone (53 bis 55).

18. Drehende elektrische Mehrphasenmaschine, die ein hinteres Lager (170) aufweist, **dadurch gekennzeichnet, dass** das hintere Lager (170) den Träger (17) der zweiten Untereinheit (16) eines Verbinders nach Anspruch 1 trägt, auf den die erste Untereinheit montiert wird.
